(19) Europäisches Patentamt
European Patent Office
Office européen des brevets

(11) **EP 1 936 921 A1**

(12) **EUROPEAN PATENT APPLICATION**

(43) Date of publication:
**25.06.2008 Bulletin 2008/26**

(51) Int Cl.:
***H04L 29/08*** *(2006.01)*

(21) Application number: **06301290.0**

(22) Date of filing: **22.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Massoulie, Laurent**
**92210, SAINT-CLOUD (FR)**

• **Neumann, Christoph**
**75015, PARIS (FR)**
• **Champel, Mary-Luc**
**35220, Marpiré (FR)**

(74) Representative: **Ruellan-Lemonnier, Brigitte**
**Thomson**
**European Patent Operations**
**46 Quai Alphonse Le Gallo**
**92648 Boulogne Cedex (FR)**

(54) **Method for assigning multimedia data to distributed storage devices**

(57) The invention concerns a method for assigning parts of multimedia files to distributed storage devices, the number of said devices being an integer n, characterized in that it comprises the following steps:
• a step consisting in dividing each multimedia file in windows, which represent data for contiguous playback of a given duration ;
• a step consisting, for each multimedia file, in determining a number k so that any original window of file can be recovered from any k distinct symbols ;
• a step consisting, for each window of each said multimedia files, in assigning n corresponding symbols to said devices, one to each device, the n distinct symbols being created using erasure coding ; and
• a step consisting in partially or totally filling the storage memory left on each device after said first steps with prefix windows of said multimedia files.

Figure 2

## Description

## FIELD OF THE INVENTION

The present invention pertains to the field of content distribution in communication networks.

## BACKGROUND OF THE INVENTION

The invention more particularly relates to a method for assigning parts of multimedia files to distributed storage devices to allow efficient multimedia playback of any multimedia file from any device. It assumes that a shared communication channel is available, e.g. devices have WIFI interfaces and are within communication range. The shared communication channel could for instance be a broadcast channel.

With various systems of storage devices that cooperate to allow each device to access multimedia content, reliability is, in the prior art, accomplished by increasing reliability on each device and not on the entire system seen globally. The present invention relies on the presence of a shared communication channel between devices so as to bring additional reliability to the system. Reliability is considered with respect to device failures. Unlike in systems of the prior art, quality of service requirements, minimizing occurrences of degraded playback experience, are taken into account in the present invention.

## SUMMARY OF THE INVENTION

An aim of the present invention is to propose a method to distribute encoded parts of each multimedia file to ensure pre-specified reliability guarantees of the system in the presence of device failures.

Another aim of the present invention is to propose a method to assign additional, not necessarily encoded parts of the multimedia files, to devices to ensure that a maximal number of concurrent devices can simultaneous play back distinct multimedia files. This will exploit knowledge of the popularity of distinct multimedia files, if information on such popularity is available.

The technical problem the present invention seeks to solve is the following: how to distribute data from multimedia files on distributed storage devices so that, using a shared communication channel, devices can efficiently playback stored multimedia files, even in the presence of failures of a fraction of the devices?

The present invention is defined, in its broader sense, in claim 1.
Advantageous embodiments are presented in the dependent claims.

A method is presented for achieving the desired placement of data to devices with minimal use of the shared communication channel and maximal quality of service for playback.

Other aspects of the present invention include:

i) a scheme for using the shared communication channel during playback operation; and
ii) a scheme for managing storage on devices during playback operation.

## BRIEF DESCRIPTION OF THE DRAWINGS

The following detailed description will be better understood with the drawings, in which:

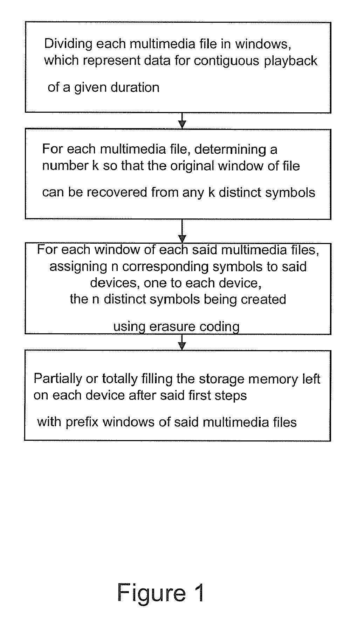

- Figure 1 shows the steps of the method according to the present invention ;

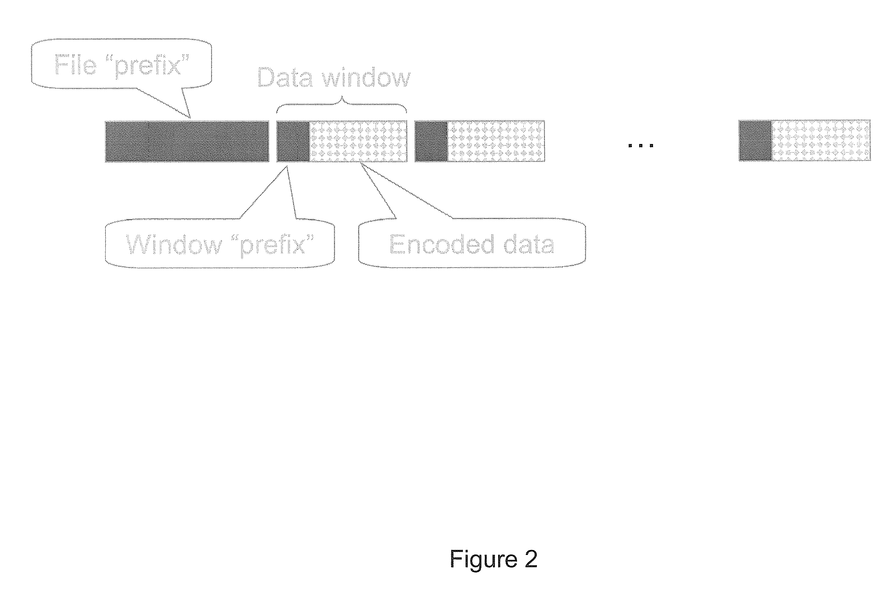

- Figure 2 represents a file and windows according to the present invention ;
- Figure 3 illustrates windows according to the present invention ;
- Figure 4 shows the state of the memory of a device according to the method of the present invention ;
- Figure 5 represents per movie data: prefix windows and encoded data according to the present invention ; and
- Figure 6 illustrates prefix windows during playback according to the present invention.

## DETAILED DESCRIPTION

We first assume that each multimedia file is divided in windows, each window representing data for contiguous playback of a given duration.

This desired placement of parts of files comprises two main steps.

In a first step (also referred to below as "Phase 1"), a fixed fraction of each file that needs to be placed on each device is determined. This fraction is selected to meet a particular local reliability target. The details are as follows.

It is assumed that the failure probability of each device is known, and denote it by **p.** It is also assumed that a maximum probability of loosing a particular file **f** is given, and denote it by **p(f)** . We let **n** denote the total number of devices that can communicate via the shared communication channel. We then determine the "decoding number" **k(f)** of file f as follows. It is chosen as the largest integer k such that the probability that a Binomial random variable with parameters (**n,p**) exceeds the integer n-**k** is not larger than the target reliability probability p(f). In other words, it is the largest integer **k** in **{0,...,n}** so that the following inequality holds:

$$\sum_{i=n-k+1}^{n} p^i \left(1-p\right)^{n-i} \binom{n}{i} \le p(f).$$

We assume that multimedia files are separated into so-called windows that represent data for contiguous playback of a given duration (e.g. one second).

Once **k**(**f**) is determined, one form of erasure coding is used so that for each specified window of multimedia file **f**, **n** distinct symbols are created, so that the original window of file can be recovered from any **k**(**f**) distinct symbols. Then for each window of the file, the **n** corresponding symbols are assigned one to each device. Such erasure codes are very common in the literature, codes such as Low Density Parity Check Codes (LDPC), Raptor Codes (RC) or Reed-Solomon codes (RS) are all examples of the erasure codes that could be used in this phase. This operation is repeated for each window of file **f**, and then for each file in the collection to be stored.

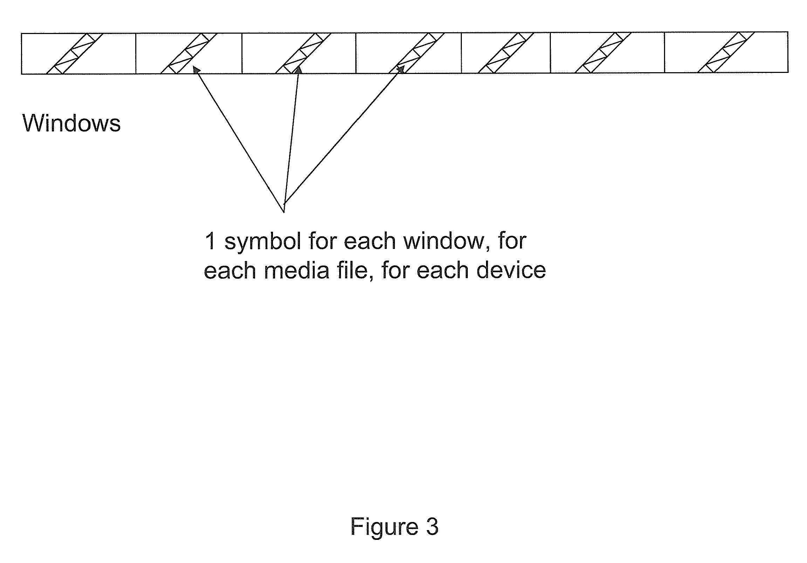

Figure 3 represents, according to the present invention, a file comprising windows, where there is one symbol for each window, for each media file, for each device. This Figure represents those symbols unique to a given file and a given device. Each window of each file f can be reconstructed from any collection of k(f) distinct symbols relative to this file and this window.

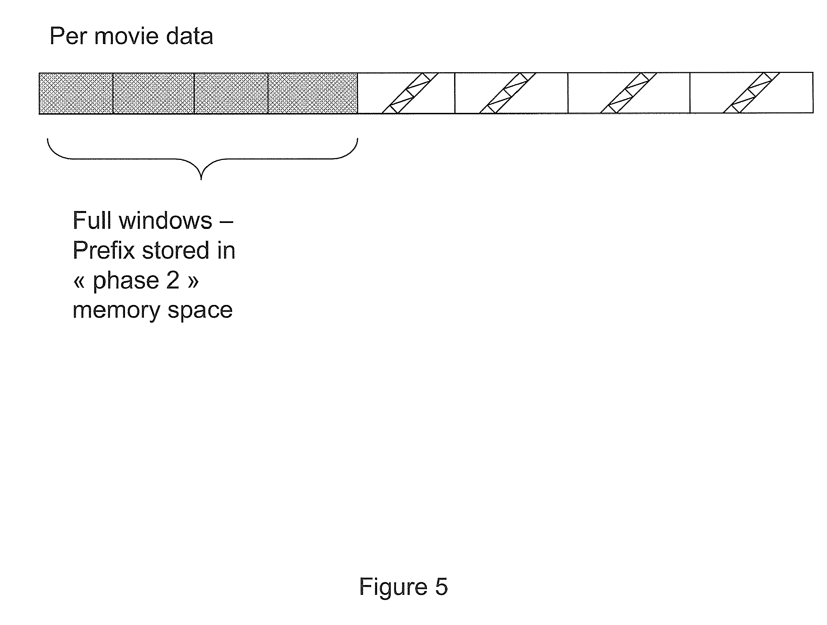

The memory space that is left available on each device will be used to store additional parts of the files, to optimize the quality of playback. We chose to store prefixes of movies that are contiguous collections of windows starting with the first window of the movie (see Figure 5). The reason for this choice is that a prefix is needed to start playback.

The second step (also referred to below as "Phase 2") is pursued as follows. One determines the storage memory left on each device at the end of phase 1. For each device, one determines the size of file **f**, that we denote by **S**(**f**), to be stored on the device. [We assume for simplicity that this size is device-independent; extensions may handle device-dependent sizes, which are useful for instance when devices have distinct storage memories]. These sizes **S**(**f**) are chosen to minimize the probability that for any given file f, playback events of file f are either delayed or interrupted.

To be more specific, we need to specify the scheduling strategy used to do playback when multiple playbacks take place.

We thus consider the following scheduling strategy. Any device **d** involved in a playback determines its lead time, denoted by **T**(**d**), that is the time until it will stop being able to playback if it doesn't get additional data via the shared communication channel. The shared communication channel then sends in priority the next data window required for playback by the device **d** with the smallest lead time **T**(**d**) among all lead times. This is an instance of the so-called Earliest-Deadline-First scheduling strategy, which is known to have desirable optimality properties [see e.g. LeBoudec and Thiran, "Network Calculus, a theory of deterministic queueing systems for the Internet", Springer Verlag, 2001].

Under such scheduling strategy, we assume that the additional data **S**(**f**) from file **f** stored on any device is in fact a prefix of file **f**, that is the first **S**(**f**) data windows in playback order. To fully specify the values **S**(**f**), we assume that the following information is available: the frequency at which any device will access file **f**, denoted by •(**f**).

Then we determine the sizes **S**(**f**) as follows. Denote by **fail**(**f**) the frequency at which requests to playback file **f** have to be delayed, in order not to interrupt ongoing requests, and under the Earliest-Deadline-First scheduling policy just described. We choose **S**(**f**) so that the largest value of **fail**(**f**) is minimized, under the constraints that

$$\sum_f S(f) \le M$$

where **M** is the memory space remaining in a given device for all files after the end of phase 1. We note that no closed form expressions exist for the values of **fail**(**f**) under standard assumptions on requests; we propose to evaluate these either via simulation, or via the use of approximate formulas available in the literature [notably, heavy-traffic approximations of the performance of earliest-deadline-first schedulers are available; see for instance ref. "Service-Differentiation for Delay-Sensitive Applications: An Optimisation-Based Approach", by Peter Key, Laurent Massoulié and Jonathan Shapiro, in Proceedings of IFIP Performance 2002 Conference.]

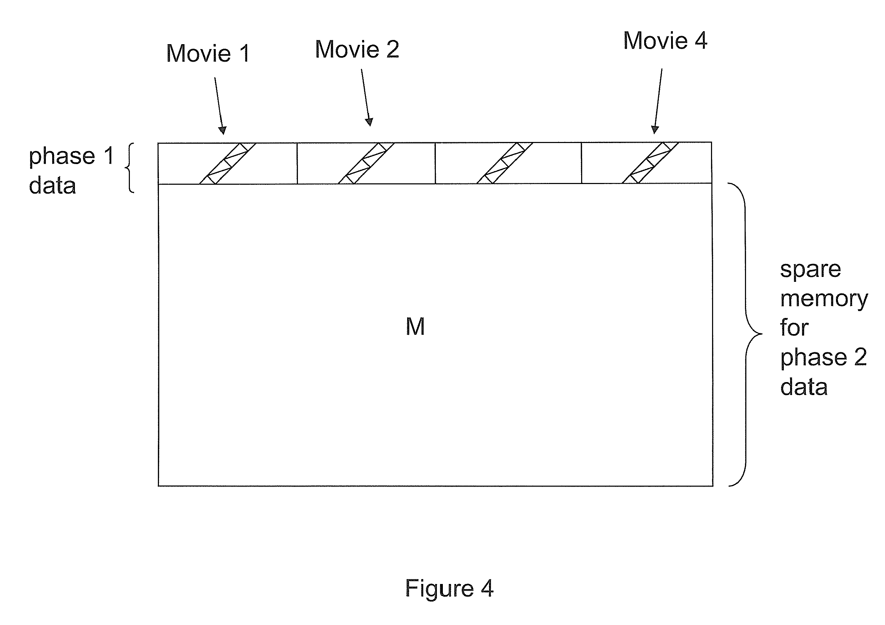

Figure 4 represents the memory space in a given device, where phase 1 data can be found for movies (files) 1, 2, 3 and 4 and where M is the spare memory space for phase 2 data.

Figure 5 illustrates data per movie: prefix windows and phase 1 encoded data.

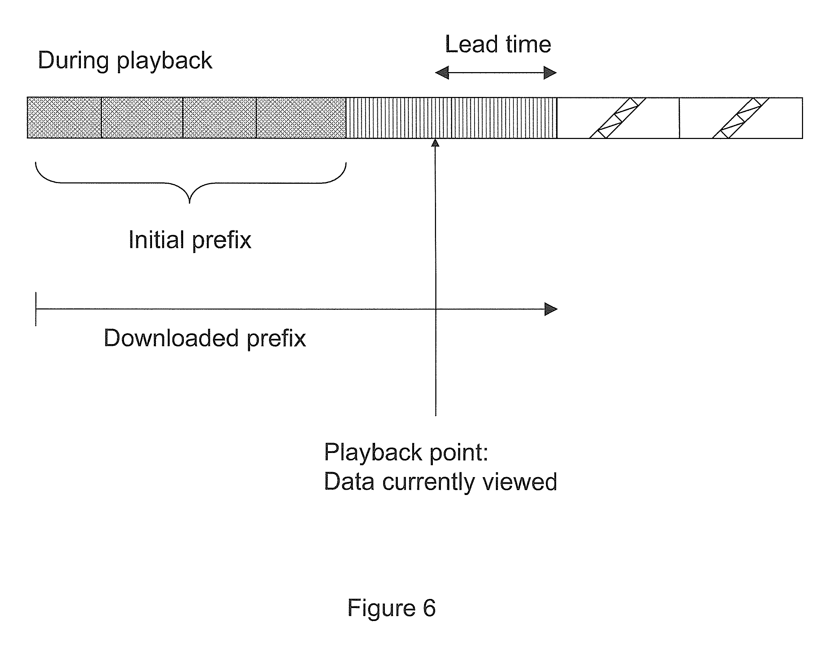

Figure 6 illustrates, according to the present invention, prefix windows during playback. In particular, there is a first set of windows, called the initial prefix, which constitutes "phase 2 data" relative to this file. There is then a number of other contiguous windows which have been downloaded after playback has started. Among these, one distinguishes between data that has already been played back and data that is still due to playback. The amount of such data that is still due to playback determines the "lead time", that is the time until playback interruption if the device does not obtain additional data.

A novelty of the above-described ideal file placement strategy is that it combines erasure-encoded data placement with not necessarily encoded data placement to jointly optimize i) reliability, and ii) quality of service, measured in terms of delayed playbacks.

One other advantage of the approach is that no particular care is needed in selecting from which device data needs to be retrieved. Indeed a random selection of sufficiently many devices will do.

Another important aspect of the method concerns the management of storage during playback. We propose to overwrite Phase 2-data from files not currently being played back by downloaded data from the file currently being played back, and this on any device. We would not allow to overwrite Phase 1-data so that the reliability is not affected. During idle periods, the device can then recover data that has been overwritten during playback from other devices. This would take place at the lowest possible priority. [Alternatively, we may save some memory that is used only to buffer data due to be played back, while not overwriting any of the original data assignment.]

The overwriting of data can advantageously be performed by exploiting the popularity of the multimedia files (movies for instance). A commercial blockbuster popular movie would not be overwritten, whereas a more confidential movie could be overwritten.

Another aspect of the method concerns how the placement is effectively done in practice, once the two critical parameters, that is $k(\mathbf{f})$, and $\mathbf{S}(\mathbf{f})$, have been determined for each file. We suggest the following approach. The shared communication channel is used to broadcast each file. During the broadcast of a given file $\mathbf{f}$, any device stores the desired prefix of size $\mathbf{S}(\mathbf{f})$; beyond this prefix, it creates window-by-window the encoded data it will keep for file $\mathbf{f}$. This can be done by locally generating at random erasure codes.

Alternatively, in another embodiment of the invention, a more efficient approach would consist in broadcasting the original files augmented with a first stage of erasure codes, and let devices generate random codes say according to Luby's LT coding scheme from all these inputs, so that the codes stored on the devices are in fact Raptor codes [see IETF draft, "Raptor Forward Error Correction Scheme for Object Delivery", M. Luby, 2006-6-23].

More generally any fountain code, such as LT, Raptor codes, or LDPC, can be used for this embodiment.

One context of interest is that of In-Flight Entertainment, where devices are assigned to plane seats, and groups of seats communicate using WIFI. In that context, the ultimate goal is to allow high-performance video-on-demand from any seat.

Another context of interest is that of a distributed storage system where in an entire network, the content is distributed all over the network. Such a system actually adds reliability since content is not only present in several places but will also be copied temporarily to new locations where it needs to be locally accessed.

The above specification, examples and drawings provide a complete description of the method according to the present invention. Since many embodiments of the invention can be made without departing from the spirit and scope of the invention, the invention resides in the claims herein after appended.

## Claims

1. Method for assigning parts of multimedia files to distributed storage devices, the number of said devices being an integer n, **characterized in that** it comprises the steps of:

   - (a) dividing each multimedia file in windows, which represent data for contiguous playback of a given duration ;
   - (b) for each multimedia file, determining a number k so that any original window of file can be recovered from any k distinct symbols ;
   - (c) for each window of each said multimedia files, assigning n corresponding symbols to said devices, one to each device, the n distinct symbols being created using erasure coding ; and
   - (d) partially or totally filling the storage memory left on each device after said first steps with prefix windows of said multimedia files.

2. Method for assigning parts of multimedia files to distributed storage devices according to claim 1 **characterized in that** said method further comprises the step of broadcasting each file.

3. Method for assigning parts of multimedia files to distributed storage devices according to claim 1 or 2 **characterized in that** the sizes of the parts the files to be stored on a device, are chosen to minimize the probability that for any given file, playback events of this file are either delayed or interrupted.

4. Method for assigning parts of multimedia files to distributed storage devices according to one of the preceding claims **characterized in that** data corresponding to step (d) from files not being played back are overwritten by downloaded data from a file being played back.

5. Method for assigning parts of multimedia files to distributed storage devices according to claim 2 **characterized in that**, during the broadcast of a file, any device stores a desired prefix having a size, which is equal to the size of the file to be stored on this device, and **in that**, beyond this prefix, it creates window-by-window the encoded data it will keep for this particular file.

6. Method for assigning parts of multimedia files to distributed storage devices according to claim 2 **characterized in that** original files augmented with a first stage of erasure codes are broadcasted, and **in that** the devices generate random codes.

7. Method for assigning parts of multimedia files to distributed storage devices according to any of the preceding claims **characterized in that** step (d) is performed using indications of the popularity of said multimedia files.

Dividing each multimedia file in windows, which represent data for contiguous playback of a given duration

For each multimedia file, determining a number k so that the original window of file can be recovered from any k distinct symbols

For each window of each said multimedia files, assigning n corresponding symbols to said devices, one to each device, the n distinct symbols being created using erasure coding

Partially or totally filling the storage memory left on each device after said first steps with prefix windows of said multimedia files

Figure 1

Figure 2

Windows

1 symbol for each window, for
each media file, for each device

Figure 3

Movie 1    Movie 2    Movie 4

phase 1 {
data  {

M

spare
memory
for
phase 2
data

Figure 4

Per movie data

Full windows –
Prefix stored in
« phase 2 »
memory space

Figure 5

During playback

Lead time

Initial prefix

Downloaded prefix

Playback point:
Data currently viewed

Figure 6

**European Patent Office**

**EUROPEAN SEARCH REPORT**

Application Number

EP 06 30 1290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE J Y B ET AL: "Design and analysis of a fault-tolerant mechanism for a server-less vide -on-demand system" PARALLEL AND DISTRIBUTED SYSTEMS, 2002. PROCEEDINGS. NINTH INTERNATIONAL CONFERENCE ON 17-20 DEC. 2002, PISCATAWAY, NJ, USA,IEEE, 17 December 2002 (2002-12-17), pages 489-494, XP010628948 ISBN: 0-7695-1760-9 * abstract * * page 490, left-hand column, paragraph 1 - paragraph 3 * | 1-4,6,7 | INV. H04L29/08 |
| A | page 491, right-hand column, item 4.1-page 492, left-hand column, item 4.2 | 5 | |
| X | EP 1 633 112 A (MICROSOFT CORP [US]) 8 March 2006 (2006-03-08) * paragraph [0017] - paragraph [0022] * * paragraph [0060] * * paragraph [0080] * * paragraph [0072] - paragraph [0074] * * paragraph [0092] - paragraph [0094] * | 1-4,6,7 | |
| A | * claim 1 * | 5 | TECHNICAL FIELDS SEARCHED (IPC) H04L |

-/--

The present search report has been drawn up for all claims

| Place of search | Date of completion of the search | Examiner |
|---|---|---|
| Munich | 6 June 2007 | Cankaya, Sukru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 936 921 A1

**European Patent Office**

## EUROPEAN SEARCH REPORT

**Application Number**

EP 06 30 1290

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MITZENMACHER M: "Digital fountains: a survey and look forward" INFORMATION THEORY WORKSHOP, 2004. IEEE SAN ANTONIO, TX, USA 24-29 OCT. 2004, PISCATAWAY, NJ, USA,IEEE, 24 October 2004 (2004-10-24), pages 271-276, XP010776150 ISBN: 0-7803-8720-1 * abstract * * page 272, right-hand column, paragraph 2 - paragraph 3 * | 1-4,6,7 | |
| A | * page 274, left-hand column, last paragraph - right-hand column, last paragraph * ----- | 5 | |
| A | US 2006/174063 A1 (SOULES CRAIG [US] ET AL) 3 August 2006 (2006-08-03) * paragraph [0015] - paragraph [0020] * ----- | 1 | |

**TECHNICAL FIELDS SEARCHED (IPC)**

The present search report has been drawn up for all claims

| Place of search | Date of completion of the search | Examiner |
|---|---|---|
| Munich | 6 June 2007 | Cankaya, Sukru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                      EP 06 30 1290

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2007

| Patent document cited in search report | | Publication date | Patent family member(s) | Publication date |
|---|---|---|---|---|
| EP 1633112 | A | 08-03-2006 | JP 2006074781 A<br>KR 20060050266 A<br>US 2006069800 A1 | 16-03-2006<br>19-05-2006<br>30-03-2006 |
| US 2006174063 | A1 | 03-08-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER KEY ; LAURENT MASSOULIÉ ; JONATHAN SHAPIRO.** Service-Differentiation for Delay-Sensitive Applications: An Optimisation-Based Approach. *Proceedings of IFIP Performance 2002 Conference*

- **M. LUBY.** Raptor Forward Error Correction Scheme for Object Delivery. *IETF draft,* 23 June 2006